# EUROPEAN PATENT SPECIFICATION

(11) **EP 2 354 836 B1**
(45) Date of publication and mention of the grant of the patent: **08.08.2018**
(21) Application number: 09015443.6
(22) Date of filing: 14.12.2009
(51) Int. Cl.: G02F 1/1333, G02F 1/13357

(54) **Display unit with an integrated backlight**
Anzeigeeinheit mit integrierter Rückbeleuchtung
Unité d'affichage doté d'un rétroéclairage intégré

(43) Date of publication of application: 10.08.2011
(73) Proprietor: Harman Becker Automotive Systems GmbH, 76307 Karlsbad (DE)
(72) Inventor: Tabor, Guenter, 78048 Villingen-Schwenningen (DE)
(74) Representative: Grünecker Patent- und Rechtsanwälte PartG mbB

(56) References cited:
- EP-A1- 1 835 330
- US-A1- 2006 243 948
- US-A1- 2008 273 139
- US-A1- 2009 153 780

## Description

The present invention relates to a display device with a liquid crystal display and a backlight.

### BACKGROUND OF THE INVENTION

Liquid crystal displays have found broad deployment in various technology applications such as personal computers, multimedia equipment, mobile phones, etc. Liquid crystal displays (LCD) have also been successfully employed in navigation and/or entertainment systems for transportation means such as aircrafts, trains, or vehicles such as cars or autobuses. Nowadays, vehicles may have a plurality of information and entertainment devices on board for distributing various image display signals to the driver and, in addition, to the other passengers. This is accomplished by separate displays each capable of displaying a different image signal. For instance, a first display device may be provided for the driver and a second or additional device may be provided for the other passengers. As the driver needs to concentrate on the surrounding traffic flow, the driver's display may only provide essential information whereas the passengers' displays may also reproduce image details. Such displays may also be used for the display of video images or other control information of any vehicle information and entertainment device, such like a television or radio receiver, a DVD player, a cell phone, an Internet access device, vehicle control devices, a vehicle rearview device etc.

The displays provided for vehicle navigation and entertainment systems require higher temperature resilience and mechanical load capacity through vibration. Moreover, the possibly changing light conditions in a vehicle require the liquid crystal displays being provided with a suitable backlight and capable of reproducing a high contrast.

Backlight is necessary for the liquid crystal displays to increase readability in low light conditions. For instance, in computer monitors typically cold cathode fluorescent lamps are employed in combination with a diffuser. Advances in production of light-emitting diodes (LED) enabled employment of LEDs as a backlight for especially in smaller LCD screens such as screens of mobile phones. Lately, white or RGB have also been employed as a backlight for computer screens. For the picture quality of liquid crystal displays the uniformity of backlighting plays an important role. LEDs are a point source of light. Therefore, in order to provide an even backlighting, diffusers are used. A diffuser is typically a layer of plastic, which diffuses the light emitted by the light source(s).

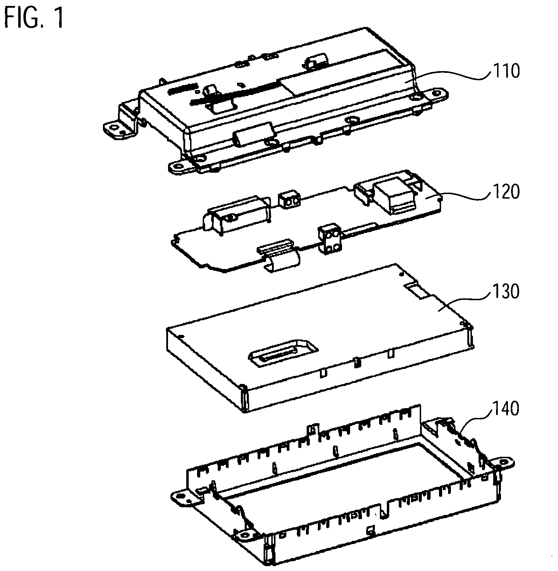

Figure 1 illustrates typical design of a display device. The entire display unit 130 in an own housing is typically purchased from a display manufacturer and positioned together with a circuitry 120 between a cover back 110 and a bezel 140 forming an outer housing. The outer housing 110, 140 may include means for positioning and fixing of the entire device within its target location.

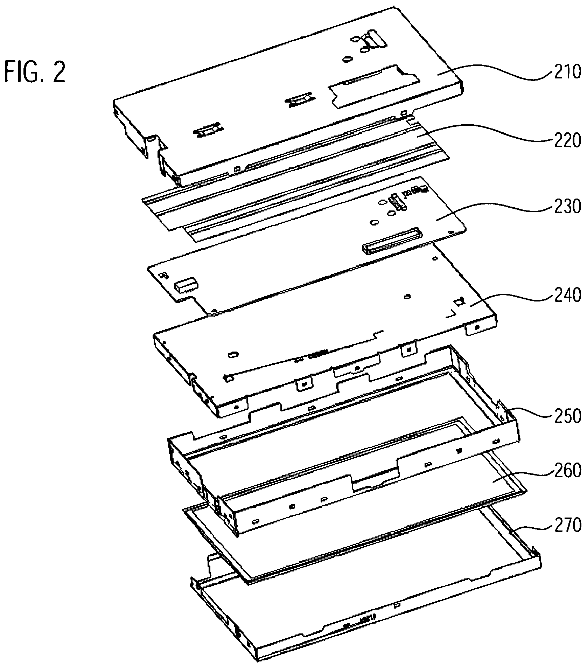

The display unit 130 further includes a liquid crystal display, a backlight system and a display cabinet. Figure 2 shows an example of basic components of a display unit 130. A display cover back 210 and a display bezel 270 are parts of the display cabinet. The liquid crystal display 260 is placed within the bezel 270. Within a frame 250, a backlight system is installed and covered by a shielding 240. A display circuitry 230 is insulated from the display cover back 210 by an insulation foil 220. A separated backlight system is installed within the frame 250 and includes light source(s), typically mounted on a local heat sink for dissipating the local heat from the light-emitting elements. The backlight may be implemented, for instance, by a cathode light or by a plurality of LEDs mounted on a heat and/or electro-conductive stripe.

Depending on the type of the background light source(s), the backlight system may further include a light guide plate, a diffusion foil, a reflector foil, a polarization foil, and/or brightness enhancement foils (not shown in Fig. 2).

Especially when light-emitting elements generating heat such as LEDs are employed, the heat generated by the LEDs, when not appropriately dissipated, raises the temperature within the housing and may reduce the quality and the lifetime of such a display device.

Moreover, when mounting displays into their target location such as a dashboard of a vehicle, it is important to fix the display device properly. Otherwise, the active area of the display may be partially covered by other mechanical parts of the display device such as diverse frames and housings. Accurate positioning is the more difficult the more mechanical elements are comprised in the display device. Even if the tolerances (uncertainty in the position) of each mechanical element involved are small, the chain of tolerances causes adding up of these uncertainties and may result in imprecise positioning of the LCD screen with respect to the target location.

Providing displays for vehicle applications such as personal cars is also challenging due to the high requirements on electromagnetic compatibility. In particular, on the board of a car, nowadays a huge amount of electronic devices are mounted, including several antennas covering different frequency bands, measurement and control electronic, etc. In order to enable simultaneous function of a multiple electronic devices in such a limited space, appropriate shielding is necessary.

EP 1 835 330 A1 relates to a liquid crystal display with an LED backlight, as specified in the preamble of present claim 1. The LED strips are covered by a rear housing part which is heat conductive to dissipate the heat produced by the LEDs. Adjacent on the other side to the rear housing part is the controller circuit.

### SUMMARY OF THE INVENTION

The problem underlying the present invention is based on the observation that the performance and the lifetime of liquid crystal display devices may decrease with a temperature raised by the source of backlight.

The aim of the present invention is to provide a liquid crystal based display device with an efficient dissipation of heat generated by the backlight source and stable and accurate positioning possibility.

This is achieved by the features as set forth in the independent claim 1. Preferred embodiments are the subject matter of the dependent claims.

It is the particular approach of the present invention to provide a display device with a liquid crystal display back-lighted by a plurality of light-emitting elements placed along a side of the liquid crystal display, wherein not only the light-emitting elements but also the area of the crystal display are covered by a heat-conducting cover so as to better dissipate heat generated by the light-emitting elements. Mounting means which are protrusions located on the backlight cover enable accurate positioning in the mounting place.

Such an approach provides efficient heat dissipation via the entire heat-conducting cover rather than by heat-conducting part located only in the area of the backlight source. At the same time, the heat-conducting cover may serve as shielding and housing, separating the integrated LCD and backlight part from the electronic circuitry. The efficient heat dissipation further improves the performance (accuracy in the visible light range) and increases the lifetime of the display device

According to an aspect of the present invention, a display apparatus is provided comprising a liquid crystal display, a backlight unit, and an electronic circuitry, wherein the liquid crystal display and the backlight unit are separated from the electronic circuitry by a backlight cover made of a heat-conducting material in order to dissipate the heat generated by the backlight unit. The backlight unit comprises a plurality of light-emitting elements for backlighting the liquid crystal display, the light-emitting elements being arranged along at least one side of the backlight cover. The backlight cover is made of a heat-conducting material, which preferably is also an electro-conductive material in order to act as a shielding between the electronic circuitry and the integrated LCD and backlight unit.

In particular, the backlight cover is made of aluminum. Aluminum has also the advantage of a relatively small weight. However, other heat and/or electro-conductive materials may equally be used. Preferably, the backlight cover is produced by diecast.

The light-emitting elements are preferably point light sources such as light-emitting diodes located on a printed circuit board such as a flexible printed circuit board (flexiboard). LEDs provide an intensive light and are relatively reliable in conditions of the deployment in a vehicle. In particular, LEDs have better starting properties than the cold cathode fluorescent lamps especially at low outside temperatures, and are more resistant to vibrations and impacts.

According to an embodiment of the present invention, the light-emitting elements are located along two opposite sides of the display unit within the front face of the backlight cover. Preferably, the light-emitting elements are placed along the two shorter opposite sides of the display, in case the display has a rectangular but not a square shape. However, the light-emitting elements may also be located along the longer sides. The present invention is not limited to light-emitting elements located on two opposite sides of the display unit. A backlight made with light-emitting elements placed on two neighbouring sides, normal on each other, may also be adopted.

The number of light-emitting elements is selected according to the size of the display device. For instance, for the seven or eight inches displays, preferably 16 to 24 light-emitting elements per side are used.

According to another embodiment of the present invention, the light-emitting elements are placed along a single side of the display unit. In this case, preferably, a longer side is selected in order to provide a sufficient light intensity. However, a shorter side may be selected as well. The present invention is not limited to a backlight positioned along a single side or along two sides of the display unit. Three or even all four sides of the display device may be used for placing the light-emitting elements along them.

According to an embodiment of the present invention, the backlight cover comprises mounting means for mounting the display apparatus into a target location. This makes the backlight cover a part of a cabinet housing, in which the display device is preferably encased. In particular, the mounting means are positioned at the sides of the backlight cover. Providing such mounting means increases the stability of the position of the entire display device including the liquid crystal display, making such display device particularly suitable for deployment in vehicles. The mounting means further enable fast montage and reduce number of additional mechanical parts necessary for placing the display device to its target location. This results in shortening of the tolerance chain and increases thus the accuracy of positioning the LCD screen within the target location. According to the invention, the mounting means are protrusions for being fixed to the target location by means of a screw or a rivet. In order to facilitate the montage, the protrusions may include holes. In addition or alternatively to the mounting means, centering means may be provided, for instance as engaging elements to be engaged and possibly fixed or locked within corresponding engaging elements on the target location. Providing the centering means increases eve more the accuracy of positioning the LCD screen within the target location. Since the mounting means itself may cause an uncertainty in the positioning, the centering elements may improve this tolerance.

Preferably, the backlight cover further includes centering means for pre-adjusting the position of the liquid crystal display within the backlight cover. The centering means may be formed for instance, as one or a plurality of pins, ribs, protrusions, notches, gaps, cut-outs, slots, etc.

In particular, the liquid crystal display panel is fixed (for instance glued) to a display panel frame and the display panel frame also provides centering means corresponding to the centering means of the backlight cover in order to adjust their mutual positions.

Preferably, the display apparatus further comprises a cabinet housing for encasing the liquid crystal display, the light-emitting elements, the backlight cover and the electronic circuit assembly; wherein the cabinet housing includes a plurality of openings for cooling of the display apparatus. The openings are preferably located on the sides of the housing and on the rear face of the housing, the front face of the housing including the image display area of the liquid crystal display. The openings enable cooling of the display device and efficient heat dissipation via the backlight cover to the outside of the housing. Efficient cooling of the display device extends the lifetime and reliability of display device components.

In particular, the liquid crystal display is a thin film transistor liquid crystal display having a diagonal of 4 to 11 inches long. However, other sizes - smaller or larger - may also be applied. The integrated liquid crystal display and backlight unit further preferably comprises a reflector for reflecting the light towards the user, a light guide plate for guiding the light provided by the light-emitting elements within the area covering the liquid crystal display, and a diffuser for uniformly diffusing the light. The reflector, the light guide plate, and the diffuser are stacked between the backlight cover and the liquid crystal display. The backlight unit may further comprise a polarization foil, a brightness enhancement foil(s) and/or other foils for improving the display image quality. The liquid crystal display is either a mono-chromatic or a color display.

Preferably, the electronic circuit assembly includes both display and backlight driving as well as display and backlight control circuitry. The display control circuitry may comprise, for instance, a graphical interface, an image display generator, a microcontroller, etc. Preferably, the electronic circuit assembly comprises all the electronics included in the display housing and necessary for driving and controlling the display device and the backlight. Locating the entire electronic circuitry necessary for the display device and the backlight near to the rear face of the backlight cover provides a shielding and allows for a compact design of the display device. Preferably, the display apparatus further comprises a shielding covering the opposite face of the electronic circuit assembly. This shielding may be a part of the housing.

According to another aspect of the present invention, a navigation and entertainment system for a vehicle is provided. The navigation and entertainment system comprises at least one display apparatus as described above for displaying image and/or video data, a graphic processor for generating an image display input signal to be displayed on the display apparatus, and a central conrol unit for controlling the operation of the graphic processor. The central control unit is for instance a central processor unit (CPU) providing the data to be presented as an image. The graphic processor provides a representation of the data for the liquid crystal display. The graphics processor may be located within the housing of the display device or on its exterior. The CPU is preferably located on the exterior of the display housing. A single CPU is preferably employed for controlling a plurality of display devices in the navigation and entertainment systems. Such a navigation and entertainment system is preferably capable of providing different image information for different display devices concurrently.

However, the display device of the present invention may also be deployed in another than navigation and entertainment system of a vehicle. It may also be employed in aircrafts and/or home entertainment systems.

The above and other objects and features of the present invention will become more apparent from the following description and preferred embodiments given in conjunction with the accompanying drawings in which:
- Figure 1: is a schematic drawing illustrating components of a typical display device;
- Figure 2: is a schematic drawing illustrating components of a typical a display unit;
- Figure 3: is a schematic drawing illustrating components of a display device in accordance with the present invention;
- Figure 4: is a schematic drawing illustrating components of a display unit in accordance with the present invention;
- Figure 5: is a schematic drawing illustrating an example of an LCD and a frame of a backlight unit;
- Figure 6: is a schematic drawing showing an example of an LCD glued within an LCD frame including pins for positioning;
- Figure 7: is a schematic drawing showing an example of a backlight unit;
- Figure 8: is a schematic drawing illustrating an example of a shielding and a printed circuit board of the display device according to the present invention;
- Figure 9A: is a schematic drawing showing the front face of a display device without cabinet housing;
- Figure 9B: is a schematic drawing showing the rear face of a display device without cabinet housing;
- Figure 10: is a schematic drawing illustrating an example of parts of a cabinet housing;
- Figure 11: is a schematic drawing illustrating an example of the assembled parts of the cabinet housing;
- Figure 12: is a schematic drawing illustrating an arrangement of the display device in accordance with the present invention;
- Figure 13A: is a schematic drawing of a shape of a display unit without a cabinet housing;
- Figure 13B: is a schematic drawing of the cabinet housing;
- Figure 14A: is a schematic drawing of an example positioning of light-emitting elements along two opposite sides of the display;
- Figure 14B: is a schematic drawing of an example positioning of light-emitting elements along two neighbouring sides of the display;
- Figure 14C: is a schematic drawing of an example positioning of light-emitting elements along a single sides of the display;
- Figure 14D: is a schematic drawing of an example positioning of light-emitting elements along three sides of the display;
- Figure 15: is a schematic drawing of a cabinet housing in accordance with an embodiment of the present invention;
- Figure 16: is a schematic drawing of a display device with cabinet housing as illustrated in Figure 15;
- Figure 17: is a schematic drawing illustrating the position of the light-emitting elements within the display device;
- Figure 18A: is a schematic drawing illustrating an example of display positioning within a vehicle navigation and entertainment system;
- Figure 18B: is a schematic drawing illustrating another example of display positioning within a vehicle navigation and entertainment system;
- Figure 19A: illustrates a navigation and/or entertainment system on a board of a vehicle with two display devices and separate hardware for controlling them; and

- Figure 19B: illustrates a navigation and/or entertainment system on a board of a vehicle with two display devices and shared hardware for controlling them.

### DETAILED DESCRIPTION

In order to provide a navigation and entertainment system for vehicles, efficient and reliable display devices are necessary. In accordance with a present invention, a display device is provided comprising a liquid crystal display with a backlight based on a plurality of light-emitting elements and capable of an efficient dissipation of the heat generated by these light-emitting elements.

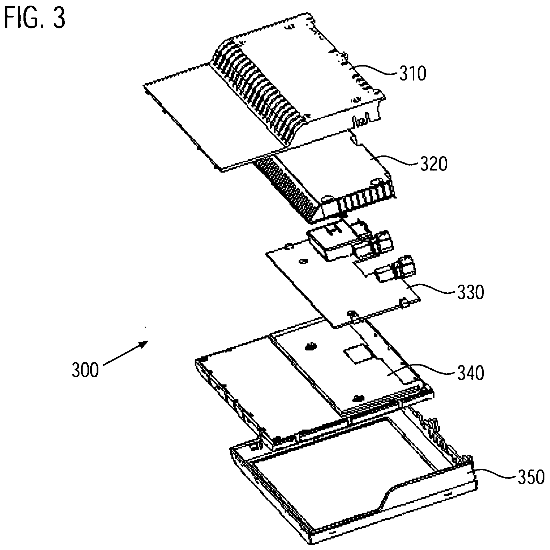

Figure 3 shows schematically an example of a display device 300 in accordance with the present invention. A display cabinet housing is formed by a display cover back 310 and the bezel 350. The display cabinet housing encases an integrated liquid crystal display and backlight unit 340, an electronic circuitry 330 and a shielding 320. The electronic circuitry is, for instance, a printed circuit board implementing the function of driving the liquid crystal display and the backlight, and/or controlling the liquid crystal display and the backlight and/or providing a graphical interface, or even more intelligence to the display device etc.

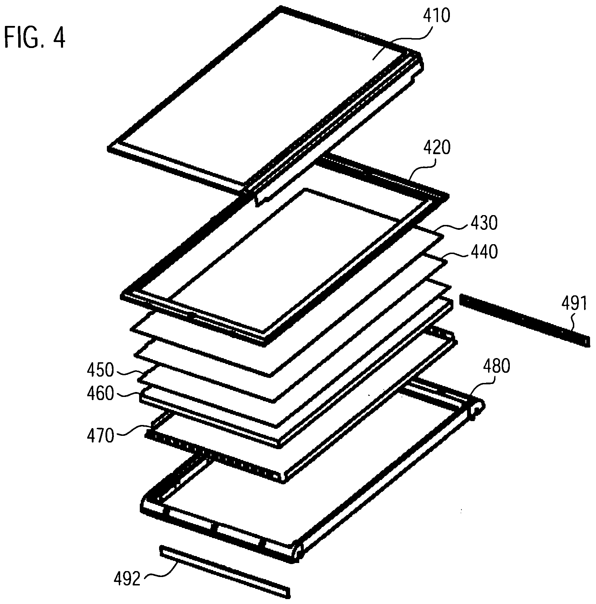

Figure 4 shows parts of the integrated LCD and backlight unit 340 according to an embodiment of the present invention. An LCD 410 is positioned within an LCD frame 420, followed by Dual-Brightness-Enhancement Foil (DBEF) 430, Brightness Enhancement Foil (BEF) 440, diffusion foil 450, Light Guide Plate (LGP) 460, and Enhanced Specular Reflector film or foil (ESR) 470. A backlight cover 480, which is shown in this figure for illustrational purposes only, forms a cover of the integrated LCD and backlight unit 340. The backlight light-emitting elements 491 and 492 on a heat sink printed circuit board (PCB) or a flexible circuit board are positioned on the left and the rights side of the LCD and backlight unit 340 within the backlight cover 480which serves for dissipating the heat produced by the light-emitting elements. In order to facilitate this, the backlight cover is made of a heat conducting material and covers with its front face the heat source and also the entire area of the display. This allows efficiently distributing and dissipating the heat generated by the light-emitting elements. The backlight cover 480 preferably not only covers but also serves for stacking therein the entire liquid crystal display and backlight unit comprising all the necessary foils, the light emitting-elements 491, 492 and the liquid crystal display 410 located within the frame 420.

The LCD 410 is preferably an LCD with an active matrix of thin-film transistors (TFTs) since such displays provide quicker response times and better image quality than passive matrix displays. However, the present invention is not limited thereto.

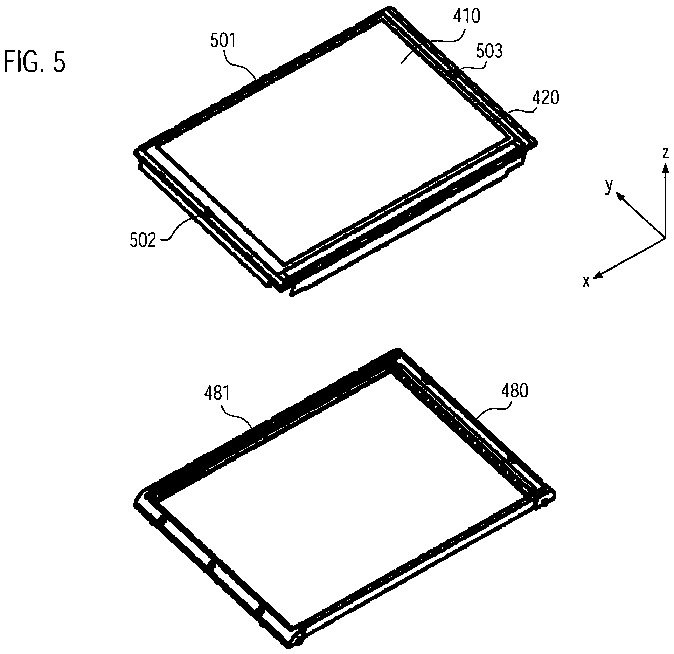

Figure 5 illustrates a closer view of the liquid crystal display 410 in the liquid crystal display frame 420. The liquid crystal display frame 420 is preferably made of plastic in order to soften positioning of the LCD glass within the display device, for instance, within the backlight cover made of metal. The LCD 410 may be fixed to the LCD frame 420 for instance by a glue. The LCD frame 420 comprises pins 501, 502, and 503 for adjusting of the glued display 410 within the display unit, the pin 501 being for adjustment in the x direction and the pins 502 and 503 are for adjustment in the y direction. These centering pins enable the viewing area of the LCD 410 with the LCD frame 420 to be pre-adjusted with respect to the backlight cover in the x and y direction, reducing thus the positioning uncertainty and shortening so the tolerance chain. The backlight cover may have corresponding centering means, for instance, in order to engage the pins 501 to 503. In z direction, the backlight cover is higher than the liquid crystal display 410. The backlight cover 480 has a surface for adjusting in the z direction. The backlight cover 480, which is shown in this figure for illustrational purposes only, is preferably made in aluminum diecast, which enables it to serve at the same time as housing (cabinet), cooling and shielding. On the left and right side, LEDs on metal stripes 491 and 492 are fixed, for instance glued, onto the backlight cover 480. However, the liquid crystal display 410 may be also positioned within the display unit without the frame 420, for instance, if it is locked by fixing elements without the housing. Such fixing elements would preferably be made of a softer material such as a plastic in order not to damage the LCD glass.

Preferably, a larger number of lower power LEDs in a standard housing is used instead of few higher power LEDs in a special housing. A larger number of LEDs gives better light conformity. Furthermore using of such lower power LEDs enables easier change of LED power or supplier, if necessary.

The backlight cover 480 may further include an assembly feature for mounting it behind a front panel. Such a construction thus requires no special mechanical parts for placing the display unit into its target location. In this manner, the integrated LCD and backlight unit may be directly integrated in the housing. The liquid crystal display is adjusted in respect to the backlight cover and thus also in respect to the target position. This allows more exact positioning of the display device in the target location.

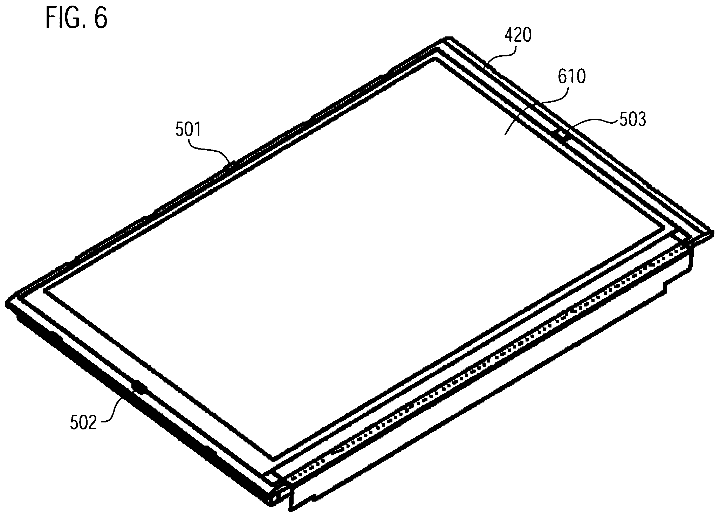

Figure 6 shows a detail of the LCD frame 420, in which the viewing area 610 is pre-adjusted in respect to the centring pins 501, 502 and 503. The liquid crystal display 410 may, for instance, be glued into the LCD frame 420.

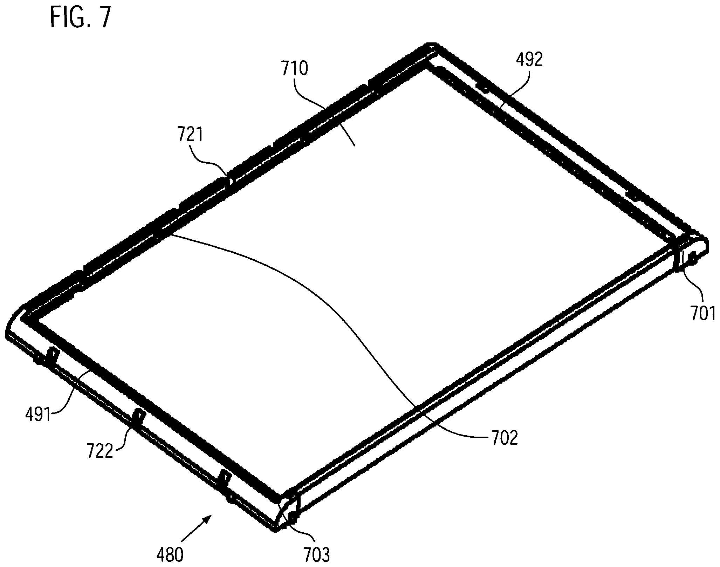

Figure 7 shows a detail of the backlight cover 480, in which all necessary foils 710 are assembled. Backlight frame 480 made out of aluminium diecast improves thermal management of the integrated LCD and backlight unit. Protrusions 701, 702 and 703 serve for adjustment in the z direction. Holes 721 and 722 are provided to engage pins 501 and 502 of the LCD frame 420 respectively, and to thus adjust the position of the LCD 410 together with the LCD frame 420 in respect to the backlight cover 480. Pins 501, 502 and holes 721 and 722 are only an example of corresponding engaging means. However, any other corresponding centring means for adjusting the LCD 420 within the backlight cover 480 may equally be provided on any of the LCD frame 410 and the backlight cover 480 such as holes, slots, pins, notches, protrusions, etc.

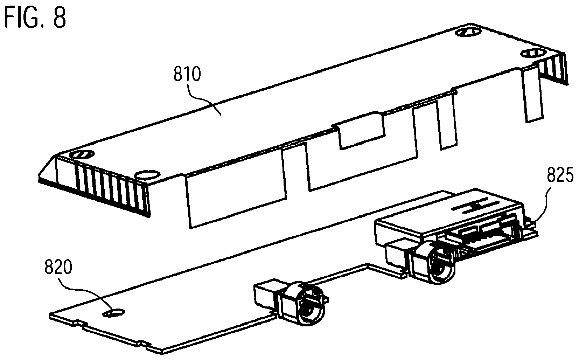

Figure 8 illustrates an example of an assembly printed board circuit 820 with a shielding connector 825 and shielding 810. The assembly board 820 may integrate various functions such as display and backlight driving and/or graphical interface and/or other control mechanisms necessary for the display target functions. The display and backlight driving may include a voltage conversion and generation, time basis, etc. The graphhical interface may include controlling of the image input to be appropriately displayed, the control mechanisms may further include detection and handling of overvoltages, too low voltages, temperature management, controlling the light-emitting elements, on/off control, etc. Futhermore, the display device may include more intelligence, for instance, by including therein a processing unit implemented on a processor, a programable hardware, microcontroller etc. This added intelligence may control, for instance displaying of image or video signal from multiple image sources such as back-camera, navigation system, or entertainment system. The display device may also handle format (for instance spatial resolution, frame rate, interlacing/progressive) conversions and or displaying and controlling the menus, or any other functions.

Alternatively, the intelligence may be placed outside the display device in a central control unit and the display electronic circuitry only performs the simple functions such as display and backlight driving.

Providing a single assembly board for the display device may reduce the size of the display compared with a solution with separated LCD board 230 and main board 120 as shown in Figures 1 and 2.

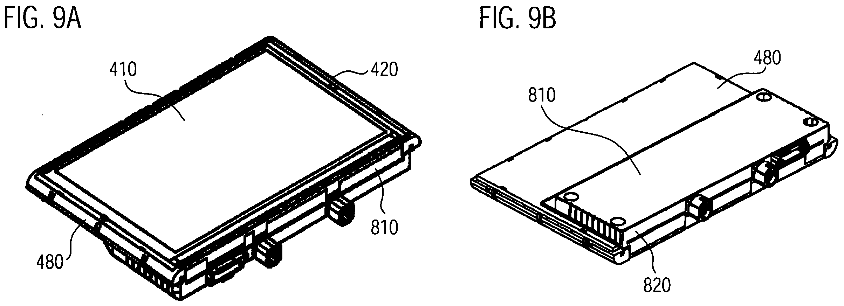

Figure 9 shows the above described components in an assembled state. In particular, Figure 9A illustrates the front face of the display device including on the top the display unit with liquid crystal display 410 within the LCD frame 420, the backlight frame cover in which LCD frame 420 is included together with all foils and the backlight LEDs described with reference to Figure 4 (not visible in Figure 9A), and the shielding 810.

Figure 9B shows the rear face of the display device, which is formed by the shielding 810 and by the bottom side of the backlight cover 480, which is shown in this figure for illustrational purposes only. Under the shielding 810, the assembly printed circuit board 820 can be seen.

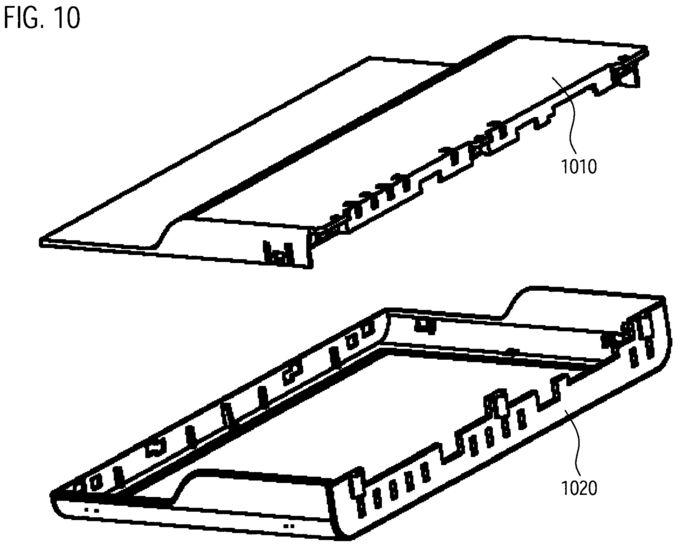

Figure 10 illustrates two parts of a cabinet housing of the display device. A front part 1010 is formed as a bezel, in which the front face of the display device shown in Figure 9A is engaged. The rear part 1020 is a cover, which follows the shape of the rear face of the display device shown in Figure 9B, formed by the surface of the shielding 810 and a part of the backlight cover 480, which is shown in this figure for illustrational purposes only.

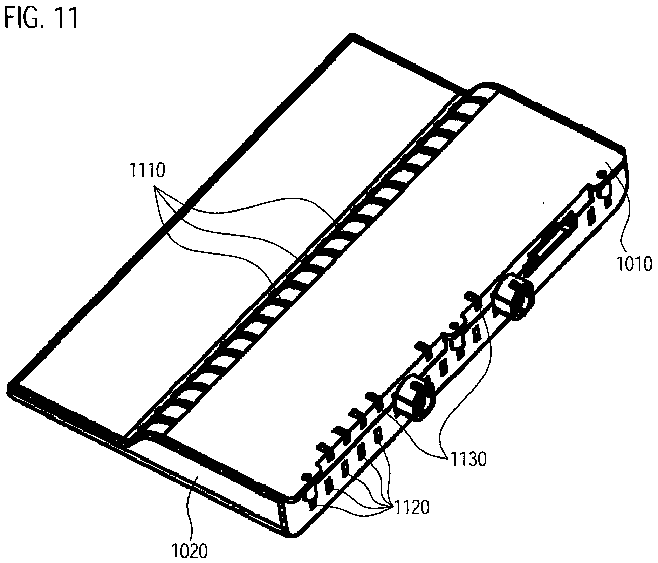

Figure 11 shows the cabinet housing of the display device in an assembled form. Cooling openings 1110, 1120, and 1130 are formed in the cabinet housing, in order to improve the cooling of the integrated LCD and backlight unit. In particular, openings 1110 and 1120 are positioned on the sides of the rear 1010 and the front 1120 part of the cabinet housing, respectively. In addition, the rear part of the cabinet housing 1010 has openings 1130 located on its top, in the vicinity of the cabinet housing border. These openings allow for cooling of the heat conducting backlight cover, which is shown in this figure for illustrational purposes only, and thus for dissipation of the heat produced by the backlight unit out of the cabinet housing. The cabinet housing is not necessarily made of metal; other materials such as various kinds of plastics may be used.

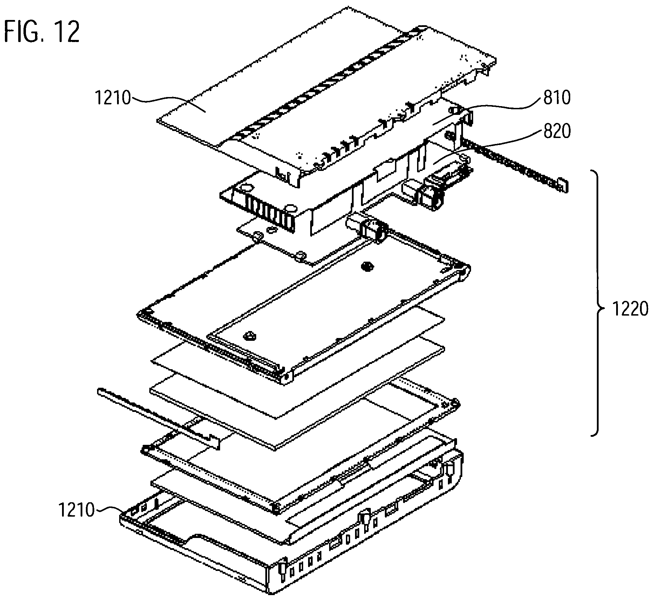

Figure 12 shows an arrangement of parts of a display device in accordance with the present invention. The three main parts are formed by the cabinet housing 1210 as illustrated in Figure 10, the shielding 810 and PCB assembly 820, and the integrated LCD and backlight unit 1220 as illustrated in Figure 4. Unlike the state of the art displays as shown in Figures 1 and 2 the entire backlight cover, which is shown in the this figure for illustrational purposes only, serves for conducting the heat produced by the light-emitting elements and the openings in the cabinet housing allow its efficient cooling.

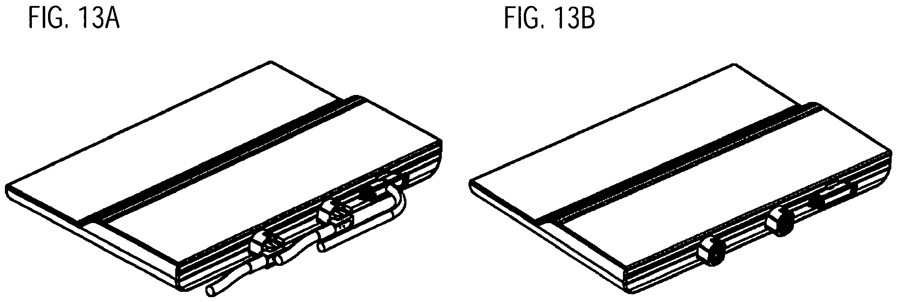

Figure 13A illustrates the outer shape of the components of the display device to be encapsulated into the cabinet housing 1010. Figure 13B shows the cabinet housing 1010. The display device with an eight inches LCD panel and without cabinet housing is shown in Figure 13A. The cabinet housing shown in Figure 13B for deployment in a car may be for instance
210 mm width, 130,5 mm height, 12,2 mm thickness of the top part and 25 mm thickness of the bottom part.

In general, the light-emitting elements for an LCD backlight may be positioned in a matrix below the LCD 410 covering its entire area and directly irradiating the LCD 410. Such a backlight unit is rather difficult to implement since the point sources of light arranged under the liquid crystal display are difficult to dissimulate. Alternatively, the light-emitting elements for an LCD backlight may be positioned below the LCD 410 along its edges irradiating the LCD panel 410 using a light guide plate and a diffuser as shown, for instance, in Figures 4 and 12. Lately, organic LEDs gained interest as an alternative uniform backlight system. Among the advantages of OLEDs belongs its uniformity as well as thinness which would allow a very compact display device construction. All the described backlight sources are also heat sources and require efficient heat dissipation. The backlight cover 480, which is show in this figure for illustrational purposes only, provides such an efficient heat dissipation.

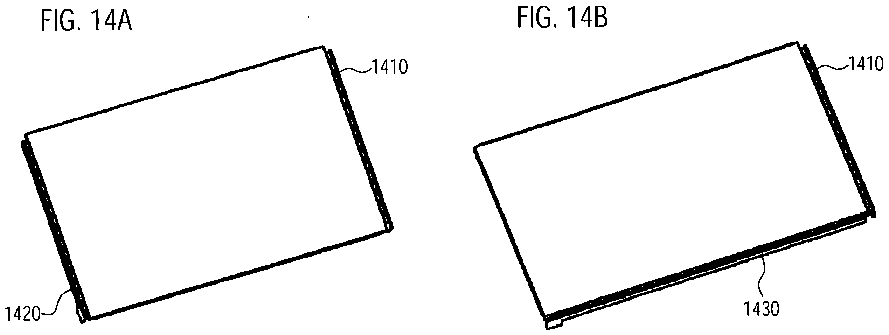

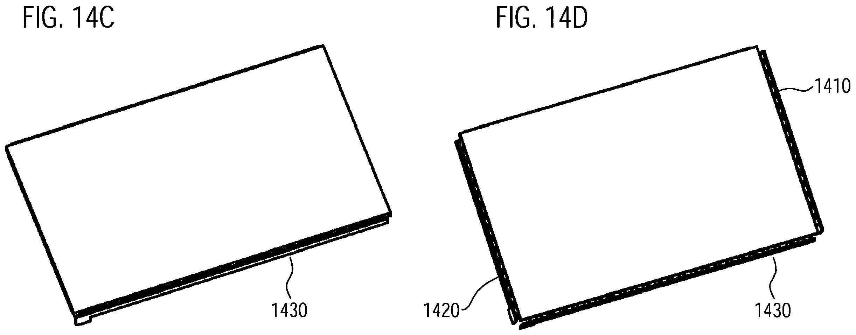

Figure 14 shows examples of positioning the light-emitting elements within the integrated LCD and backlight unit 1220. The light-emitting elements are, for instance LEDs. Figure 14A illustrates light-emitting elements positioned on two opposite sides of the integrated LCD and backlight unit 1220. In particular, Figure 14A shows positioning on the left and on the right side of the integrated LCD and backlight unit 1220. However, the light/emitting elements may also be positioned on the top and the bottom side of the integrated LCD and backlight unit 1220. The number of light-emitting elements on each side is preferably the same and depends on the size of the LCD 410 to be backlighted. For instance, 16 LEDs on the left side and 16 LEDs on the right side may be employed to provide backlight for a car display of 8" size.

Figure 14B illustrates light-emitting elements positioned on the neighbouring sides of the integrated LCD and backlight unit 1220. In particular, the light-emitting elements positioned on the right and on the bottom side of the integrated LCD and backlight unit 1220 are shown. However, arbitrary two neighbouring sides may be chosen for positioning the light-emitting elements. The number of light-emitting elements on the side and on the bottom of the integrated LCD and backlight unit 1220 may be determined similarly to the ratio of the lengths of the right and the bottom edge of the integrated LCD and backlight unit 1220. For instance, 16 LEDs on the right side and 24 LEDs on the bottom side may be employed.

Figure 14C illustrates light-emitting elements 1403 positioned only along one side of the integrated LCD and backlight unit 1220. Preferably, a longer side is chosen for placement of the light-emitting elements, which enables placing of more light-emitting elements and thus, a more intensive backlighting. For instance, 24 LEDs may be employed at a bottom side. In this example the longer side is either the bottom or the top side. However, placing the light-emitting elements along a shorter side (in this example left or right) is also possible.

Alternatively, the LEDs may be placed on three or all four sides of the integrated LCD and backlight unit 1220. Figure 14D illustrates light-emitting elements 1410, 1420, and 1430 positioned on the right, left and bottom side, respectively.

In general, the number of light-emitting elements per side depends on the size of the LCD display, on the light radiating properties of the light-emitting elements and on the requirements of the target application. For instance, for an application in a car, a backlight system for 7 inches or 8 inches large displays capable of providing a luminance of 600 cd/m² is desirable. However, in a car, various different displays may be used having other sizes, smaller or larger than 7 or 8 inches.

The particular positioning of the light-emitting elements is to be selected according to the requirements of the display device deployment. From the point of view of a compact design, the configurations shown in Figures 14A, 14B and 14D require the thickness of the integrated LCD and backlight unit 1220 on both the top and the bottom side in order to be adapted to the height of the light-emitting elements. This is not the case for a configuration with light elements placed only along one side. In such a case, the height of the light-emitting elements only influences the height of the integrated LCD and backlight unit 1220 of the one side (for instance, the bottom side) and partially on sides neighbouring thereto, i.e. the integrated LCD and backlight unit 1220 viewed from the side may have a form of a wedge. Consequently, higher light-emitting elements (possibly more powerful) may be employed while keeping the integrated LCD and backlight unit 1220 still compact.

On the other hand, an advantage of the configuration in Figure 14A is the better thermal management. Since the light-emitting elements are placed on the shorter opposite sides, the heat may be better distributed and dissipated in respect to the backlight cover 480. The configurations shown in Figures 14B to 14D include the light-emitting elements on a longer side, for instance positioned on a flexible cable / printed circuit board stripe, which may increase the heat generated and make its distribution more difficult.

Moreover, the design of the light guide plate 460 in terms of uniformity is simpler for the configurations in Figures 14A and 14C. For the configurations in Figures 14B and 14D this may be more difficult, since the dispersion in two main directions, orthogonal on each other has to be taken into account for the light guiding plate design. A light guiding plate typically diffuses light through a series of bumps, the density of which increases with the distance from the light source according to a diffusion equation.

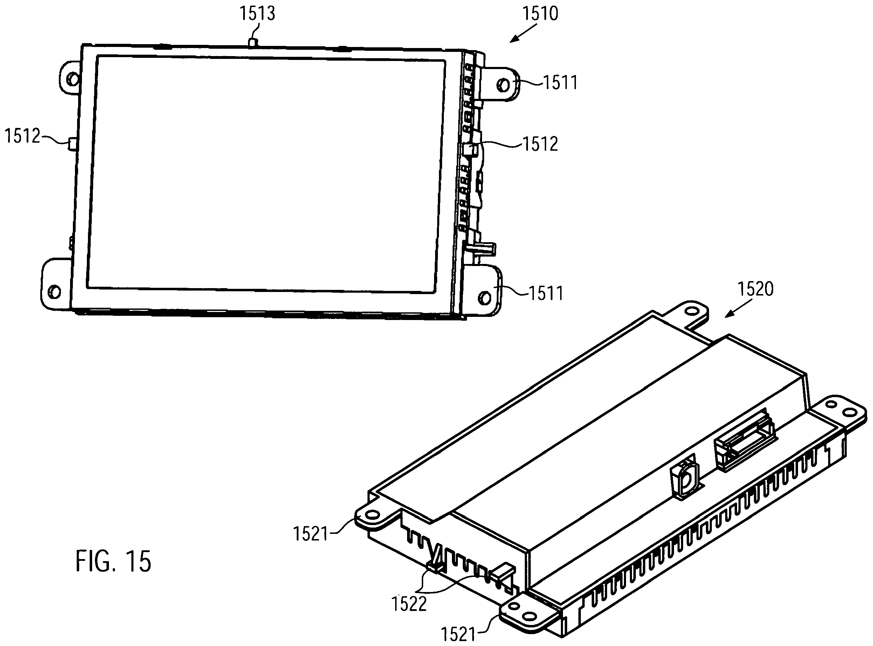

Figure 15 shows another example of a front face 1510 and a rear face 1520 of a cabinet housing for the display device according to the present invention. In this example, a backlight cover, shown in this figure for illustrational purposes only, includes an assembly feature and forms an integral part of the cabinet housing. In particular, the backlight cover comprises on its shorter sides mounting protrusions 1521 for fixing the display device on a target location, for instance on a dashboard of a vehicle.

Providing the mounting protrusions as a part of the backlight cover increases the stability of the mounted display device and facilitates its adjusting to the target position. The adjustment of the display device is in this way independent from the fitting of the cabinet housing.

The display device may be fixed to the target position using the mounting protrusions 1521 for instance by a screw or a rivet, it may also by glued or welded. The front face 1510 of the cabinet housing may also comprise mounting protrusions 1511 for fixing of the display device in the target location. The mounting protrusions 1511 may overlap with the mounting protrusions 1521 on the backlight cover. Via common fixing of the backlight cover and the cabinet housing front face 1510, a more exact positioning of the display device is possible. However, the mounting still may have an uncertainty in positioning.

Thus, in addition to the mounting protrusions, centering protrusions 1512, 1513 or 1522 on the cabinet housing front face 1510 or the backlight cover may be provided for adjusting the position of the display device and for fixing (locking) it in the target location. Here, the centering protrusions 1512 placed on the left and right side of the display device serve for centering the display device vertically. The centering protrusion(s) 1513 placed on the top and/or on the bottom of the display device serves for centering the display device horizontally. These protrusions, or separate protrusions such as 1522 may also serve for adjusting an appropriate depth of placing the display device within the target location. Providing the centering means further increases the accuracy in positioning and reduces the tolerance chain.

The backlight cover providing mounting means 1521 for mounting the display device into its target location, centering means 1522 for centering the display device within the target location, and centering means 701-703 for centering the inside parts of the display device such as the liquid crystal display has an advantage of accurate positioning of the display device, which is especially important for vehicle applications.

According to the present invention, the backlight cover is a central mechanical element of the display device having a housing function possibly including mounting and centering of the display device within the target location as well as positioning and centering of other parts of the display device within/on the backlight cover. The backlight cover further provides an efficient heat dissipation and electromagnetic shielding.

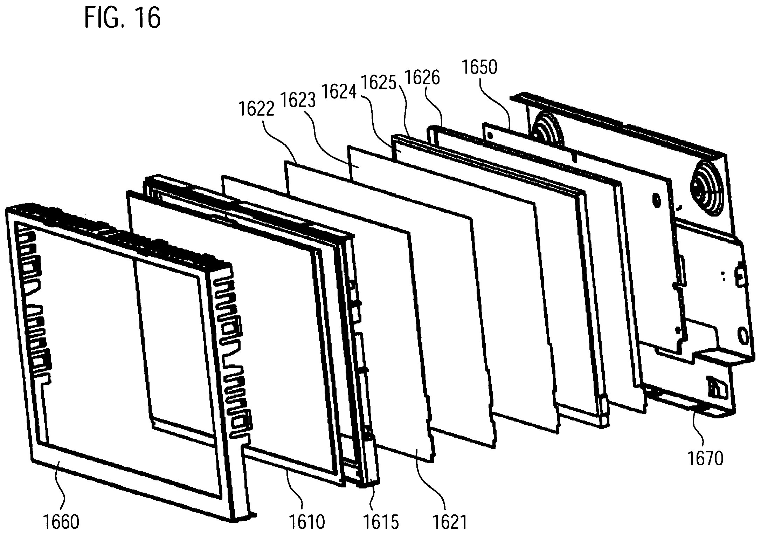

Figure 16 illustrates parts of the display device assembled in the cabinet housing shown in Figure 15. The front face of the cabinet housing 1510 is formed by a front bezel 1660. The rear face of the cabinet housing is formed by the rear cover 1670. A thin film transistor LCD 1610 is located within an LCD frame 1615 and together with polarization foil 1621, dual brightness-enhancement foil 1622, brightness enhancement foil 1623, diffuser 1624, light guide plate 1625, and reflector 1626 included in the integrated LCD and backlight unit in the base frame 1640 (backlight cover). The electronics 1650 comprising display device driving circuitry and display device control circuitry is located between the base frame 1640 and the rear cover 1670. The base frame 1640 separates the electronic circuitry 1650 from the rest of the display device and acts as an electromagnetic shielding. At the same time, the base frame 1640 forms an integral part of the cabinet housing and enables the positioning of the entire display device within its target location. Its heat conducting properties enable a dissipation of heat produced in the integrated LCD and backlight unit. The rear cover 1670 is preferably also made of metal in order to provide a shielding for the electronic circuitry 1650 from the side opposite to the shielding formed by the base frame 1640.

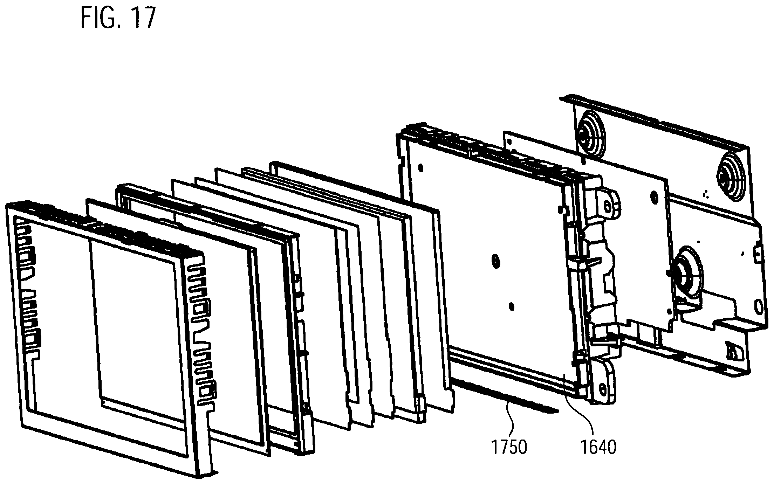

Figure 17 shows a display device similar to the display device of Figure 16. Backlight-providing light-emitting elements 1750 are in this example only located on the bottom side of the LCD screen 1610. The TFT LCD may be, for instance a seven inches LCD.

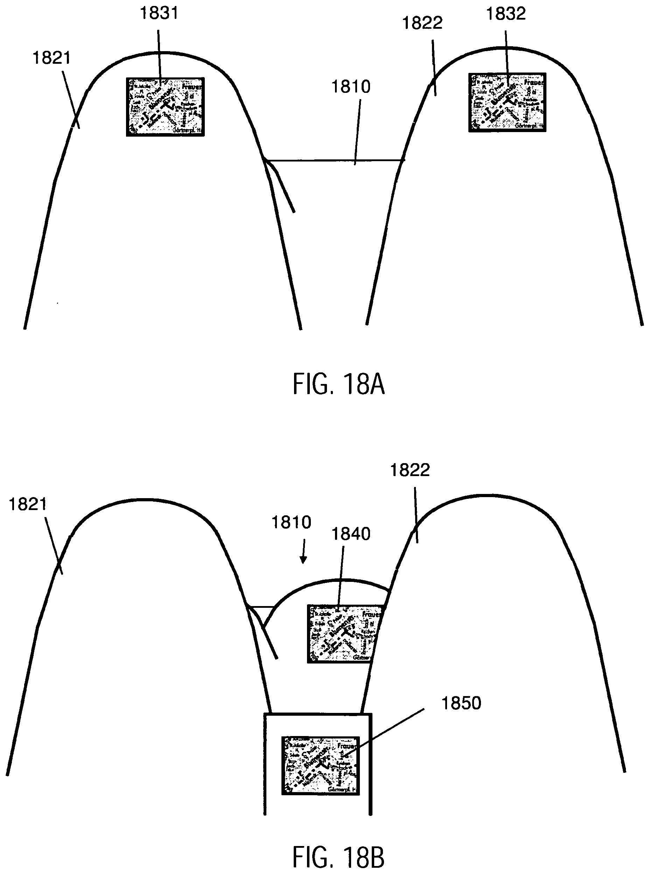

Two examples of target locations for a plurality of displays in a vehicle are illustrated in Figures 18A and 18B. The configurations take the rear-seat passengers into account. As shown in Fig. 18A, the individual display devices 1831 and 1832 are mounted on the back side of the front-seats 1821 and 1822, preferably both display devices 1831 and 1832 can display individual image signals, for instance different video entertainment signals supplied by a DVD player or a vehicle TV receiver, vehicle information signals provided by the car navigation system or any combination thereof. The display configuration of Figure 18B differs from the arrangement shown in Figure 18A in that the rear-seat passengers have a single display device 1850 whereas at least one other display device 1840 is mounted on the vehicle dashboard 1810. Other configurations of displays in a vehicle navigation and entertainment system may be adopted. For instance, displays of different sizes may be arranged in the driver's field of view (for instance directly on the instrument panel) and in the front-seat passenger's field of view in order to provide different amount of information to the driver and to other passengers.

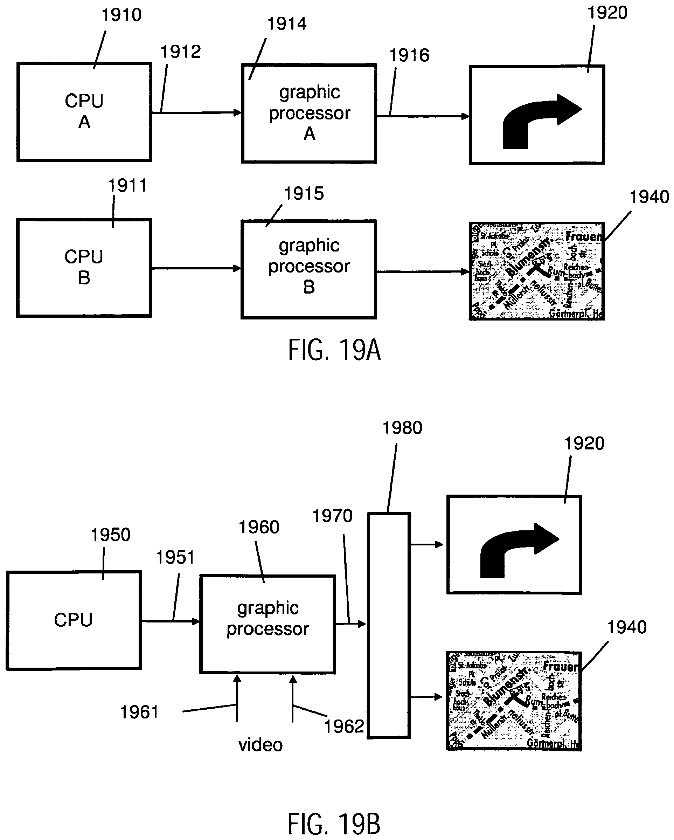

Figure 19A and Figure 19B schematically illustrate parts of a navigation and entertainment system with two displays. Figure 19A shows a navigation and entertainment system with two separated displays 1920 and 1940, in which the images to the two displays are generated separately. For this purpose, individual image processing hardware generates the image signals for the first display 1920 and additional hardware for the second display 1940. A graphic processor 1914 generates the images display signal 1916 for display on a first display device 1920. The operation of graphic processor 1914 is controlled by image generation commands 1912 supplied by CPU 1910. CPU 1910 performs a preprocessing of the image data to be displayed and provides the image content together with control information to the graphic processor 1914. In particular, the image display signal 1916 is generated by taking the image content and control information from the CPU, the display resolution, the frame rate etc. into account. For this purpose the graphic processor may perform drawing operations like rotating, zooming, vector operations etc. The image data for the second display device 1940 are generated by CPU 1911 and graphic processor 1915 in a corresponding manner.

Another configuration of the navigation and entertainment system is illustrated schematically in Figure 19B. A CPU 1950 generates image content and control information 1951 for two individual image signals. The image content and control information 1951 are transmitted to a graphic processor 1960 for generating an image display signal 1970 based on the received information 1951. The image content and control information 1951 may comprise information for two separate images included within one image signal. Correspondingly, processor 1960 generates an image display input signal 1970 comprising image display information relating to two separate devices.

Alternatively, graphic processor 1960 may receive additional image information 1961, 1962 from external sources. The single image display output signal 1970 may thus comprise a combination of any of the received image content informations 1951, 1961, 1962. Preferably, the single image display input signal 1970 is made up of image information for two separate displays. Display devices 1920 and 1940 used in vehicles may have an image resolution of, for instance, 480 x 200 pixels or of 800 x 480 pixels, or any other resolution, depending on their target position. Such image sizes do not necessarily require the processing capacity provided by conventional graphic processors. The spare processing power may easily be employed for the generation of a combined single image display input signal 1970. Both displays 1920 and 1940 may have an equal size, or dfferent sizees. If they have an equal size, the image generation by graphic processor 1960 may be accomplished in a simplier manner.

The single image display input signal 1970 is supplied to an image display generator 1980 generating two image display signals for the separate display devices 1920 and 1940. Image display generator 1980 splits the received single image display input signal 1970 into the separate image display signals. However, the graphic processor 1960 and the image generator 1980 may also be combined and their functions thus performed by a single processor.

Although the previous embodiments have been described with respect to the processing and display of two image display signals, a plurality of display devices may receive individual image display information from a signal image display input signal 1970.

However, the navigation and entertainment system may also comprise a single display 1920 only. The navigation ans entertainment system according to Figure 19B is a solution resulting in lower hardware costs and smaller size if a plurality of display devices is to be employed. In a vehicle both systems 19A and 19B may be also combined. The graphic processor can be included as a part of the electronic circuits assembly or provided separately.

Summarizing, the present invention provides a display device with an integrated liquid crystal display and backlight unit. The backlight is provided by a plurality of light-emitting elements placed along at least one side of the display. In order to efficiently conduct and dissipate the heat generated by the light-emitting elements, the light emitting elements are embedded within a backlight cover. The backlight cover is made of a heat-conductive material and covers the light emitting elements and the area for placing the liquid crystal display. On the other face of the backlight cover, an electronic circuitry is located. The entire display device is preferably encased within a housing with openings for cooling. The display device of the present invention can be advantageously employed within vehicle board systems for navigation and/or entertainment.

## Claims

1. A display apparatus comprising:
a liquid crystal display (410);
a plurality of light-emitting elements (491, 492) for backlighting the liquid crystal display, the light-emitting elements being arranged along a side of the liquid crystal display (410); a backlight cover (480) covering with its front face the plurality of light-emitting elements (491, 492) and the area of the liquid crystal display (410), the backlight cover being made of a heat-conducting material for dissipating the heat generated by the light-emitting elements and
an electronic circuit assembly (820) positioned on the rear face of the backlight cover (1010, 1020),
**characterized in that**
the backlight cover comprises protrusions (1521) positioned at sides of the backlight cover for mounting the display apparatus into a target location.

2. The display apparatus according to claim 1 wherein the backlight cover (480) is made of electro-conductive material and acts as a shielding for the electronic circuit assembly (820).

3. The display apparatus according to claim 1 or 2 wherein the backlight cover (480) is made of a metal such as aluminum.

4. The display apparatus according to any of claims 1 to 3 wherein the backlight cover (480) is made by diecast.

5. The display apparatus according to any of claims 1 to 4 wherein the backlight cover (480) comprises centering means (1512, 1513) for centering the display apparatus within the target location.

6. The display apparatus according to claims 1 to 5 wherein the backlight cover (480) comprises centering means (701-703, 721, 722) for adjusting the position of the liquid crystal display (410) within the backlight cover (480).

7. The display apparatus according to any of claims 1 to 6 wherein the light-emitting elements (1410, 1420) are positioned along two opposite sides of the liquid crystal display (410).

8. The display apparatus according to any of claims 1 to 6 wherein the light-emitting elements (1410, 1430) are positioned along two directly neighbouring sides of the liquid crystal display (410).

9. The display apparatus according to any of claims 1 to 6 wherein the light-emitting elements (1430) are positioned along a single side of the liquid crystal display (410).

10. The display apparatus according to claim 9 wherein
the liquid crystal display has a rectangular but not a square shape; and
the light-emitting elements (1430) are positioned along a longer side of the liquid crystal display (410).

11. The display apparatus according to any of claims 1 to 10 wherein the light-emitting elements (491, 492) are light-emitting diodes positioned in a sequence on a printed circuit board strip.

12. The display apparatus according to any of claims 1 to 11 wherein
the liquid crystal display (410) is a thin film transistor liquid crystal display; and
a reflector (470), a light guide plate (460), and a diffuser (450) are stacked between the backlight cover (480) and the liquid crystal display (410).

13. The display apparatus according to any of claims 1 to 12 wherein
the electronic circuit assembly (820) includes display and backlight driving and display and backlight control circuitry; and
the display apparatus further comprises a shielding (810) covering the face of the electronic circuit assembly (820) opposite to the face which is closer to the rear face of the backlight cover (480).

14. A navigation and entertainment system for a vehicle, the system comprising:
a display apparatus (1920) according to any of claims 1 to 13 for displaying image data;
a graphic processing unit (1914) for generating an image display input signal to be displayed on the display apparatus; and
a control unit (1910) for controlling the operation of the graphic processor (1914).

## Patentansprüche

1. Anzeigevorrichtung, die Folgendes umfasst:
eine Flüssigkristallanzeige (410);
eine Vielzahl von lichtemittierenden Elementen (491, 492) zur Rückbeleuchtung der Flüssigkristallanzeige, wobei die lichtemittierenden Elemente entlang einer Seite der Flüssigkristallanzeige (410) angeordnet sind;
eine Rückbeleuchtungsabdeckung (480), die mit ihrer vorderen Fläche die Vielzahl von lichtemittierenden Elementen (491, 492) und den Bereich der Flüssigkristallanzeige (410) bedeckt, wobei die Rückbeleuchtungsabdeckung aus einem wärmeleitenden Material besteht, um die Wärme, die von den lichtemittierenden Elementen erzeugt wird, zu zerstreuen, und
eine elektrische Schaltungsanordnung (820), die auf der Rückfläche der Rückbeleuchtungsabdeckung (1010, 1020) positioniert ist,
**dadurch gekennzeichnet, dass**
die Rückbeleuchtungsabdeckung Vorsprünge (1521) umfasst, die an den Seiten der Rückbeleuchtungsabdeckung positioniert sind, um die Anzeigevorrichtung in einem Zielgebiet zu montieren.

2. Anzeigevorrichtung nach Anspruch 1, wobei die Rückbeleuchtungsabdeckung (480) aus einem elektronenleitenden Material hergestellt ist und als ein Schild für die elektronische Schaltungsanordnung (820) agiert.

3. Anzeigevorrichtung nach Anspruch 1 oder 2, wobei die Rückbeleuchtungsabdeckung (480) aus einem Metall, wie Aluminium, hergestellt ist.

4. Anzeigevorrichtung nach einem der Ansprüche 1 bis 3, wobei die Rückbeleuchtungsabdeckung (480) durch einen Druckguss hergestellt wird.

5. Anzeigevorrichtung nach einem der Ansprüche 1 bis 4, wobei die Rücklichtabdeckung (480) Zentrierungsmittel (1512, 1513) zum Zentrieren der Anzeigevorrichtung innerhalb des Zielgebiets umfasst.

6. Anzeigevorrichtung nach einem der Ansprüche 1 bis 5, wobei die Rückbeleuchtungsabdeckung (480) Zentrierungsmittel (701-703, 721, 722) zum Anpassen der Position der Flüssigkristallanzeige (410) innerhalb der Rückbeleuchtungsabdeckung (480) umfasst.

7. Anzeigevorrichtung nach einem der Ansprüche 1 bis 6, wobei die lichtemittierenden Elemente (1410, 1420) entlang zwei gegenüberliegenden Seiten der Flüssigkristallanzeige (410) positioniert sind.

8. Anzeigevorrichtung nach einem der Ansprüche 1 bis 6, wobei die lichtemittierenden Elemente (1410, 1430) entlang zwei unmittelbar aneinander angrenzenden Seiten der Flüssigkristallanzeige (410) positioniert sind.

9. Anzeigevorrichtung nach einem der Ansprüche 1 bis 6, wobei die lichtemittierenden Elemente (1430) entlang einer einzigen Seite der Flüssigkristallanzeige (410) positioniert sind.

10. Anzeigevorrichtung nach Anspruch 9, wobei
die Flüssigkristallanzeige eine rechteckige, jedoch keine quadratische Form aufweist; und
die lichtemittierenden Elemente (1430) entlang einer längeren Seite der Flüssigkristallanzeige (410) positioniert sind.

11. Anzeigevorrichtung nach einem der Ansprüche 1 bis 10, wobei die lichtemittierenden Elemente (491, 492) lichtemittierende Dioden sind, die in Reihe auf einem Leiterplattenstreifen positioniert sind.

12. Anzeigevorrichtung nach einem der Ansprüche 1 bis 11, wobei
die Flüssigkristallanzeige (410) eine Dünnfilmtransistor-Flüssigkristallanzeige ist; und
ein Reflektor (470), eine Lichtleiterplatte (460) und ein Diffusor (450) zwischen der Rückbeleuchtungsabdeckung (480) und der Flüssigkristallanzeige (410) aufgestapelt sind.

13. Anzeigevorrichtung nach einem der Ansprüche 1 bis 12, wobei
die elektronische Schaltungsanordnung (820) eine Antriebsschaltung der Anzeige und der Rückbeleuchtung und eine Steuerschaltung der Anzeige und der Rückbeleuchtung einschließt; und
die Anzeigevorrichtung ferner einen Schild (810) umfasst, der die Fläche der elektronischen Schaltungsanordnung (820) gegenüber der Fläche abdeckt, die näher an der Rückfläche der Rückbeleuchtungsabdeckung (480) liegt.

14. Navigations- und Unterhaltungssystem für ein Fahrzeug, wobei das System Folgendes umfasst:
eine Anzeigevorrichtung (1920) nach einem der Ansprüche 1 bis 13 zum Anzeigen von Bilddaten;
eine Grafikverarbeitungseinheit (1914) zum Erzeugen eines Bildanzeigeeingabesignals, das auf der Anzeigevorrichtung angezeigt werden soll; und
eine Steuereinheit (1910) zum Steuern des Betriebs des Grafikprozessors (1914).

## Revendications

1. Appareil d'affichage comprenant :
un écran d'affichage à cristaux liquides (410) ;
une pluralité d'éléments électroluminescents (491, 492) pour rétroéclairer l'écran d'affichage à cristaux liquides, les éléments électroluminescents étant agencés le long d'un côté de l'écran d'affichage à cristaux liquides (410) ;
un cache de rétroéclairage (480) recouvrant avec sa face avant la pluralité d'éléments électroluminescents (491, 492) et la zone de l'écran d'affichage à cristaux liquides (410), le cache de rétroéclairage se composant d'un matériau conducteur de chaleur pour dissiper la chaleur générée par les éléments électroluminescents et d'un ensemble circuit électronique (820) positionné sur la face arrière du cache de rétroéclairage (1010, 1020),
**caractérisé en ce que** le cache de rétroéclairage comprend des saillies (1521) positionnées au niveau de côtés du cache de rétroéclairage pour monter l'appareil d'affichage dans un emplacement cible.

2. Appareil d'affichage selon la revendication 1 dans lequel le cache de rétroéclairage (480) se compose d'un matériau électro-conducteur et sert de blindage pour l'ensemble circuit électronique (820).

3. Appareil d'affichage selon la revendication 1 ou 2 dans lequel le cache de rétroéclairage (480) se compose d'un métal tel que l'aluminium.

4. Appareil d'affichage selon l'une quelconque des revendications 1 à 3 dans lequel le cache de rétroéclairage (480) est créé par coulée sous pression.

5. Appareil d'affichage selon l'une quelconque des revendications 1 à 4 dans lequel le cache de rétroéclairage (480) comprend des moyens de centrage (1512, 1513) pour centrer l'appareil d'affichage dans l'emplacement cible.

6. Appareil d'affichage selon les revendications 1 à 5 dans lequel le cache de rétroéclairage (480) comprend des moyens de centrage (701-703, 721, 722) pour ajuster la position de l'écran d'affichage à cristaux liquides (410) dans le cache de rétroéclairage (480).

7. Appareil d'affichage selon les revendications 1 à 6 dans lequel les éléments électroluminescents (1410, 1420) sont positionnés le long de deux côtés opposés de l'écran d'affichage à cristaux liquides (410).

8. Appareil d'affichage selon les revendications 1 à 6 dans lequel les éléments électroluminescents (1410, 1430) sont positionnés le long de deux côtés directement voisins de l'écran d'affichage à cristaux liquides (410).

9. Appareil d'affichage selon les revendications 1 à 6 dans lequel les éléments électroluminescents (1430) sont positionnés le long d'un seul côté de l'écran d'affichage à cristaux liquides (410).

10. Appareil d'affichage selon la revendication 9 dans lequel l'écran d'affichage à cristaux liquides a une forme rectangulaire mais pas carrée ; et
les éléments électroluminescents (1430) sont positionnés le long d'un côté plus long de l'écran d'affichage à cristaux liquides (410).

11. Appareil d'affichage selon l'une quelconque des revendications 1 à 10 dans lequel les éléments électroluminescents (491, 492) sont des diodes électroluminescentes positionnées en une séquence sur un ruban de carte de circuit imprimé.

12. Appareil d'affichage selon l'une quelconque des revendications 1 à 11 dans lequel
l'écran d'affichage à cristaux liquides (410) est un écran d'affichage à cristaux liquides à transistor à film mince ; et un réflecteur (470), une plaque de guidage de lumière (460), et un diffuseur (450) sont empilés entre le cache de rétroéclairage (480) et l'écran d'affichage à cristaux liquides (410).

13. Appareil d'affichage selon l'une quelconque des revendications 1 à 12 dans lequel
l'ensemble circuit électronique (820) inclut des circuits d'entraînement d'affichage et de rétroéclairage et des circuits de commande d'affichage et de rétroéclairage ; et
l'appareil d'affichage comprend en outre un blindage (810) recouvrant la face de l'ensemble circuit électronique (820) opposée à la face qui est plus proche de la face arrière du cache de rétroéclairage (480).

14. Système de navigation et audio/vidéo pour un véhicule, le système comprenant :
un appareil d'affichage (1920) selon l'une quelconque des revendications 1 à 13 pour afficher des données d'image ;
une unité de traitement graphique (1914) pour générer un signal d'entrée d'affichage d'image à afficher sur l'appareil d'affichage ; et
une unité de commande (1910) pour commander le fonctionnement du processeur graphique (1914).
